# EUROPEAN PATENT SPECIFICATION

(11) **EP 2 565 090 B1**
(45) Date of publication and mention of the grant of the patent: **04.05.2016**
(21) Application number: 12179224.6
(22) Date of filing: 03.08.2012
(51) Int. Cl.: B60T 8/17, B60T 8/26, B60T 8/32, B62L 3/00

(54) **Motorcycle with ABS module at a position forward of the head pipe of said motorcycle**
Motorrad mit vor dem Rahmenvorderrohr dessen Motorrads angebrachtem ABS-Aggregat
Motocyclette avec module ABS devant le tube frontal du cadre de cette motocyclette

(30) Priority: 27.08.2011 JP 2011185375
(43) Date of publication of application: 06.03.2013
(73) Proprietor: Honda Motor Co., Ltd., Tokyo 107-8556 (JP)
(72) Inventor: Kuwano, Hideki, Wako-shi, Saitama 351-0193 (JP); Uchida, Odai, Wako-shi, Saitama 351-0193 (JP)
(74) Representative: Stevens, Jason Paul

(56) References cited:
- EP-A1- 1 842 755
- EP-A1- 2 106 980
- EP-A1- 2 213 536
- EP-A1- 2 216 218
- EP-A1- 2 311 699
- US-A1- 2009 079 258

## Description

The present invention relates to a motorcycle having an ABS module.

A motorcycle having an ABS (antilock braking system) module configured to control a braking force of a brake mounted thereon is known from, for example, JP-A-9-216547.

As shown in Fig. 1 of JP-A-9-216547, an ABS module (13) (numerals in brackets indicate reference numerals as used in JP-A-9-216547) is provided via a bracket (14) on a head pipe (2a) of a front portion of a vehicle body (1) of a motorcycle.

When a first brake operating element (12₁) provided on a handlebar (10) is operated, hydraulic information of a first master cylinder (M₁) is input to the ABS module (13) via a brake hose (17₁) as piping. The ABS module (13) controls a front brake (Bf) via a brake hose (18) on the basis of the input hydraulic information.

In the same manner, when a second brake operating element (12₂) provided on the handlebar (10) is operated, hydraulic information of a second master cylinder (M₂) is input to the ABS module (13) via a brake hose (17₂), and the ABS module (13) controls the front brake (Bf) or a rear brake (Br) via a rigid conduit (21).

The ABS module (13) is arranged in the vicinity of and in front of a head pipe (2a). By arranging the ABS module (13) in the vicinity of the front of the head pipe (2a), increase in length of the brake hoses (17₁, 17₂, 18) can be inhibited to some extent.

However, a piping connecting port of the ABS module (13) is essentially apart from the head pipe (2a) to some extent.

When the handlebar (10) is steered to turn about the head pipe (2a), the brake hoses (17₁, 17₂) are displaced together with the handlebar (10). The more one end of each of the brake hoses (17₁, 17₂) is apart from the head pipe (2a), the larger the amount of deflection at the brake hoses (17₁, 17₂) becomes and, in order to allow the deflection to be absorbed, the length of the brake hoses (17₁, 17₂) needs to be increased.

Therefore, since the piping is significantly affected by the steering, it is necessary to design the system such that the piping can hardly come into abutment with the vehicle body at the time of the steering, so that the design tends to be complicated.

Other arrangement of brake piping in motorcycles with ABS modules are disclosed in EP 2216218 according to the preamble of claim 1, further. EP 2213536, US 2009/0079258, and EP 1842755.

As a countermeasure, a technology which is capable of reducing the influence of the steering is desired.

It is an object of at least the preferred embodiment of the present invention to provide a technology to reduce the influence of steering of a handlebar on piping.

According to a first aspect of the invention, there is provided a motorcycle comprising: a head pipe provided on a front portion of a vehicle body; a front brake configured to brake a front wheel; a front master cylinder configured to apply a braking pressure to the front brake; a front piping provided between the front master cylinder and the front brake, configured to transmit a liquid pressure; a rear brake configured to brake a rear wheel; a rear master cylinder configured to apply a braking pressure to the rear brake; rear piping provided between the rear master cylinder and the rear brake and configured to transmit a liquid pressure; and an ABS module provided at a midsection of the front piping and of the rear piping and being capable of reducing the braking pressure of the front brake and of the rear brake, the ABS module being mounted at a position forward of the head pipe and offset to one side with respect to a lateral centre of the vehicle, wherein the front piping includes: front upstream piping configured to connect the front master cylinder and the ABS module, including flexible first front upstream piping extending from the front master cylinder to an upper side of a front upstream coupling member and metallic second front upstream piping extending from the front upstream coupling member to the ABS module, wherein the front upstream coupling member is provided at a midsection of the front upstream piping and at a position offset to the other side with respect to the lateral centre of the vehicle, and arranged between the ABS module and the head pipe in a side view of the vehicle, and front downstream piping configured to connect the ABS module and the front brake, said front downstream piping including metallic first front downstream piping extending from the ABS module to a front downstream coupling member and flexible second front downstream piping extending from a lower side of the front downstream coupling member to the front brake, wherein said front downstream coupling member is provided at a midsection of the front downstream piping and at a position offset to the other side with respect to the lateral centre of the vehicle, and arranged between the ABS module and the head pipe in side view of the vehicle; wherein the rear piping includes: rear upstream piping configured to connect the rear master cylinder and the ABS module, including flexible first rear upstream piping extending from the rear master cylinder to a rear upstream coupling member and metallic second rear upstream piping extending from the rear upstream coupling member to the ABS module, wherein the rear upstream coupling member is provided at a midsection of the rear upstream piping and at a position offset to the other side with respect to the lateral centre of the vehicle, and arranged in the vicinity of the head pipe, and rear downstream piping configured to connect the ABS module and the rear brake, and wherein the front upstream coupling member and the front downstream coupling member are located next to each other.

With this arrangement, since the front upstream coupling member and the front downstream coupling member arranged between the ABS module and the head pipe in side view of the vehicle are provided, the front upstream coupling member and the front downstream coupling member are arranged in the vicinity of the head pipe. Since one end of each of the brake hoses is connected to each of the front upstream coupling member and the front downstream coupling member arranged in the vicinity of the head pipe like this, one end of each of the brake hoses is supported in the vicinity of the steering. The closer to the centre of the steering a supported end is located, the less the brake hoses are affected by the steering. In other words, since the front upstream coupling member is arranged in the vicinity of the head pipe, the distance from the front master cylinder to the front upstream coupling member may be prevented from changing significantly irrespective of the steering of the handlebar, so that the deflection of the brake hoses generated by the steering can be reduced, whereby the interference with other components may be reduced and the number of steps of design may be reduced.

Furthermore, since the front downstream coupling member is arranged in the vicinity of the head pipe, the distance from the front downstream coupling member to the front brake is not changed significantly irrespective of the steering of the handlebar, so that the deflection of the brake hoses generated by the steering can be reduced, whereby the interference with other components may be reduced and the number of steps of design may be reduced.

Further, as the rear upstream coupling member is arranged in the vicinity of the head pipe, the influence of the steering of the handlebar on the brake hose as the rear upstream piping may be reduced.

In addition, since the front upstream coupling member, the front downstream coupling member, and the rear upstream coupling member are all arranged at positions offset to the other side from the lateral centre of the vehicle, the workability of maintenance or the like is improved.

Preferably, a motor axial line of the ABS module is oriented in the longitudinal direction of the vehicle, and the front upstream coupling member, the front downstream coupling member, and the rear upstream coupling member are arranged within the vertical extent of the ABS module.

With this arrangement, the piping lengths from the front upstream coupling member and the rear upstream coupling member to the ABS module and the piping length from the ABS module to the front downstream coupling member can be shortened, so that reduction of the cost and weight of the piping can be achieved.

In a preferred form, the motorcycle further comprises an electronic control unit configured to control a power unit arranged on one side with respect to the lateral centre of the vehicle and at the side of the head pipe, and a harness connecting port of the ABS module is also arranged on one side with respect to the lateral centre of the vehicle.

Since the electronic control unit and the harness connecting port are arranged together on one side with respect to the lateral centre of the vehicle in this arrangement, the operation to mount the harness is easy.

Preferably, the electronic control unit is arranged within the lateral width of the ABS module in front view of the vehicle.

Since the electronic control unit is arranged in a space on the rear side of the ABS module with respect to the vehicle, effective utilization of the space and reduction in size of the front portion of the vehicle body are achieved.

A preferred embodiment of the invention will now be described by way of example only and with reference to the accompanying drawings, in which:
Fig. 1 is a left side view of a motorcycle according to a preferred embodiment of the present invention;
Fig. 2 is a circuit drawing of a brake system of the motorcycle;
Fig. 3 shows operational drawings of the brake system;
Fig. 4 is a perspective view of a principal portion of the motorcycle;
Fig. 5 is a plan view of the principal portion of the motorcycle;
Fig. 6 Is a side view of the principal portion of the motorcycle;
Fig. 7 is a cross-sectional view taken along line 7 in Fg. 6;
Fig. 8 is a drawing as viewed in the direction indicated by arrow 8 in Fig. 6; and
Fig. 9 shows operational drawings of the motorcycle according to the prior art and the preferred embodiment.

Referring now to the attached drawings, an embodiment of the present invention will be described below. The drawings are to be viewed in the direction in which the reference numerals are viewed the right way, and arrows in the drawings marked "FRONT" indicate the front of a vehicle.

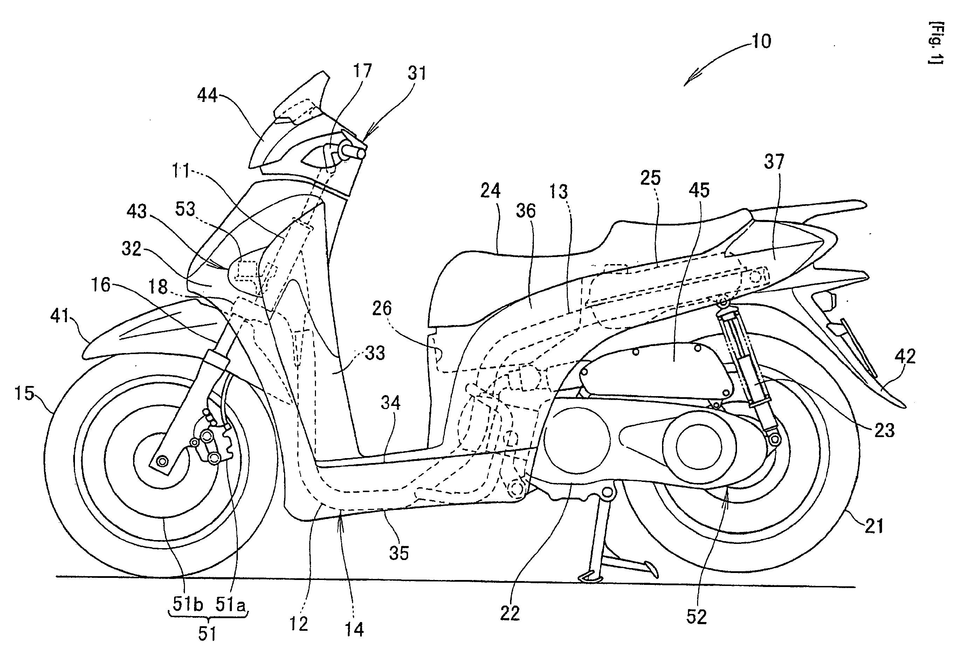

As shown in Fig. 1, a motorcycle 10 is of a scooter type, and includes a main frame 12 having a U-shape in side view extending downward from a head pipe 11 provided on a front portion of a vehicle body 14 and a seat rail 13 extending rearward of the vehicle from a rear portion of the main frame 12.

The motorcycle 10 includes a bottom bridge 18 axially supported by the head pipe 11, a front fork 16 as a steering system provided on the bottom bridge 18 and provided with a front wheel 15 at a lower portion thereof, a handlebar 17 provided on an upper portion of the front fork 16 and configured to steer the front wheel 15, a power unit 22 provided on the rear portion of the main frame 12 so as to be pivotable in the vertical direction and provided with a rear wheel 21 on a rear portion thereof, a rear cushion 23 provided between the power unit 22 and the seat rail 13 and configured to absorb an impact from the ground, and a seat 24 provided on an upper portion of the seat rail 13 and configured to allow a rider to be seated thereon. A fuel tank 25 and a storage box 26 are provided under the seat 24.

The handlebar 17 is provided with handle covers 31 configured to integrally rotate with the handlebar 17, the head pipe 11 is covered with a front cover 32 on a front side thereof with respect to the vehicle, an upper portion of the main frame 12 is covered with a leg shield 33, a lower portion of the main frame 12 is covered with a step floor 34 and an under cover 35, and the seat rail 13 is covered with a side cover 36 and a rear cover 37.

A front fender 41 is provided above the front wheel 15, a rear fender 42 is provided above the rear wheel 21, turn indicator lights 43 are provided on the front cover 32, a head lamp 44 is provided in front of the handle covers 31, and an air cleaner 45 is provided above the power unit 22.

The motorcycle 10 includes a front brake 51 of a hydraulic type provided on the front wheel 15 by a front caliper 51 a provided on the front fork 16 and configured to brake a front disk 51 b, a rear brake 52 provided on a rear portion of the power unit 22 and configured to brake the rear wheel 21, and an ABS module 53 arranged in the front cover 32 and in front of the head pipe 11 and configured to control a braking force with respect to the front wheel 15 at the time of operation of the front brake 51 and control a braking force with respect to the rear wheel 21 and the front wheel 15 at the time of operation of the rear brake 52. The ABS module 53 is arranged by using a space between the left and right turn indicator lights 43.

Subsequently, a circuit of a brake system will be described.

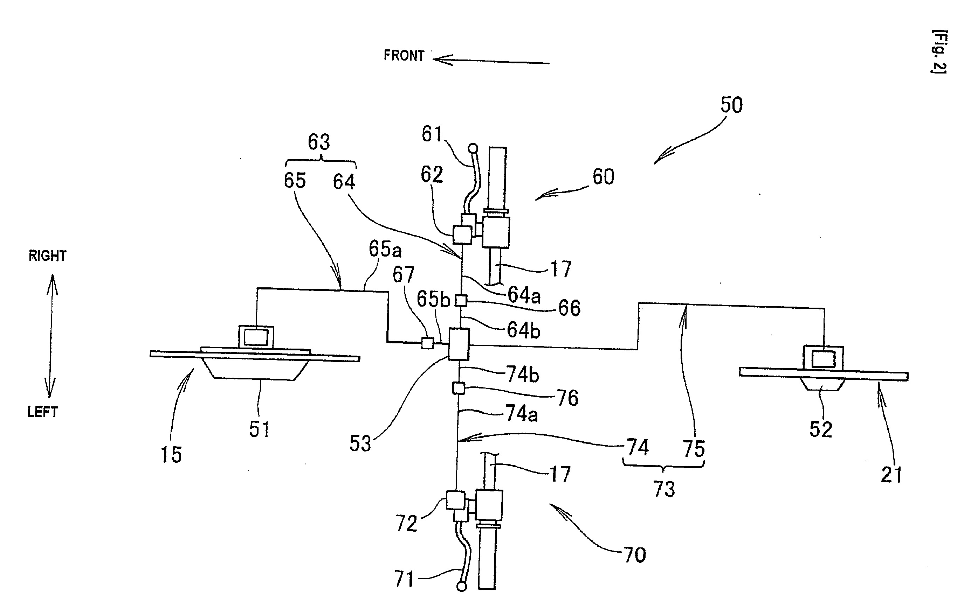

As shown in Fig. 2, a brake system 50 includes a front brake system 60 configured to brake only the front wheel 15 and a rear brake system 70 configured to brake both the front wheel 15 and the rear wheel 21.

The front brake system 60 includes a first operating element 61 provided on the right side of the handlebar 17 and configured to operate the front brake 51, a front master cylinder 62 provided on the first operating element 61 and configured to generate hydraulic pressure, front piping 63 provided between the front master cylinder 62 and the front brake 51 and configured to transmit the hydraulic pressure, and the ABS module 53 provided at a midsection of the front piping 63 and configured to control the front brake 51.

The front piping 63 includes front upstream piping 64 configured to connect the front master cylinder 62 and the ABS module 53, and front downstream piping 65 configured to connect the ABS module 53 and the front brake 51.

Furthermore, a front upstream coupling member 66 is provided at a midsection of the front upstream piping 64. The front upstream piping 64 includes flexible first front upstream piping 64a extending from the front master cylinder 62 to the front upstream coupling member 66 and metallic second front upstream piping 64b extending from the front upstream coupling member 66 to the ABS module 53.

A front downstream coupling member 67 is provided at a midsection of the front downstream piping 65. The front downstream piping 65 includes metallic first front downstream piping 65b extending from the ABS module 53 to the front downstream coupling member 67 and flexible second front downstream piping 65a extending from the front downstream coupling member 67 to the front brake 51.

The rear brake system 70 includes a second operating element 71 provided on the left side of the handlebar 17 and configured to operate the front brake 51 and the rear brake 52, a rear master cylinder 72 provided on the second operating element 71 and configured to generate hydraulic pressure, rear piping 73 provided between the rear master cylinder 72 and the rear brake 52 and configured to transmit the hydraulic pressure, and the ABS module 53 provided at a midsection of the rear piping 73 and configured to control the rear brake 52 and the front brake 51.

The rear piping 73 includes rear upstream piping 74 configured to connect the rear master cylinder 72 and the ABS module 53, and rear downstream piping 75 configured to connect the ABS module 53 and the rear brake 52.

Furthermore, a rear upstream coupling member 76 is provided at a midsection of the rear upstream piping 74. The rear upstream piping 74 includes flexible first rear upstream piping 74a extending from the rear master cylinder 72 to the rear upstream coupling member 76 and metallic second rear upstream piping 74b extending from the rear upstream coupling member 76 to the ABS module 53.

Piping such as the front piping 63 includes flexible hoses and metallic tubes which maintain a certain shape, and is not specifically limited as long as it has a tubular shape irrespective of being flexible or metallic.

Subsequently, an operation of the brake system will be described.

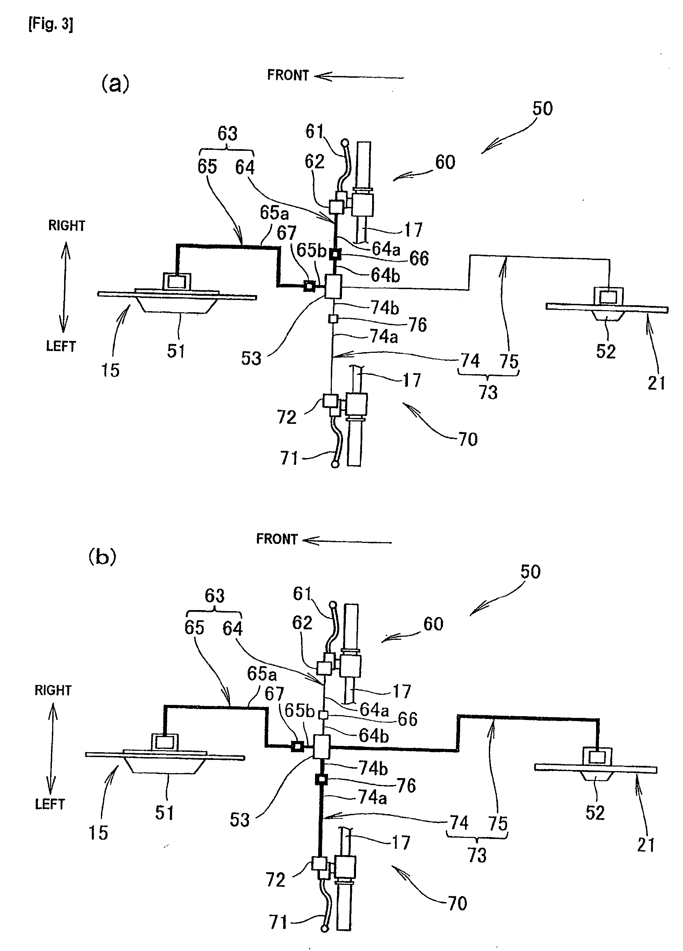

Fig. 3(a) is a drawing showing an operation of the front brake system 60. When the first operating element 61 is operated, the hydraulic pressure generated in the front master cylinder 62 is transmitted to the ABS module 53 through the first front upstream piping 64a, the front upstream coupling member 66, and the second front upstream piping 64b. In addition, the hydraulic pressure transmitted to the ABS module 53 is transmitted to the front brake 51 through the first front downstream piping 65b, the front downstream coupling member 67, and the second front downstream piping 65a.

Fig. 3(b) is a drawing showing an operation of the rear brake system 70. When the second operating element 71 is operated, the hydraulic pressure generated in the rear master cylinder 72 is transmitted to the ABS module 53 through the first rear upstream piping 74a, the rear upstream coupling member 76, and the second rear upstream piping 74b. Part of the hydraulic pressure transmitted to the ABS module 53 is transmitted to the rear brake 52 through the rear downstream piping 75. The reminder of the hydraulic pressure transmitted to the ABS module 53 is transmitted to the front brake 51 through the first front downstream piping 65b, the front downstream coupling member 67, and the second front downstream piping 65a.

In the rear brake system 70, the hydraulic pressure is allowed to be transmitted only to the front brake 51 or only to the rear brake 52 under the control of the ABS module 53. In the present embodiment, the rear brake system 70 brakes both of the front wheel 15 and the rear wheel 21. However, the invention is not limited thereto, and a configuration in which only the rear wheel 21 is braked is also applicable.

Subsequently, the position of the ABS module 53 will be described.

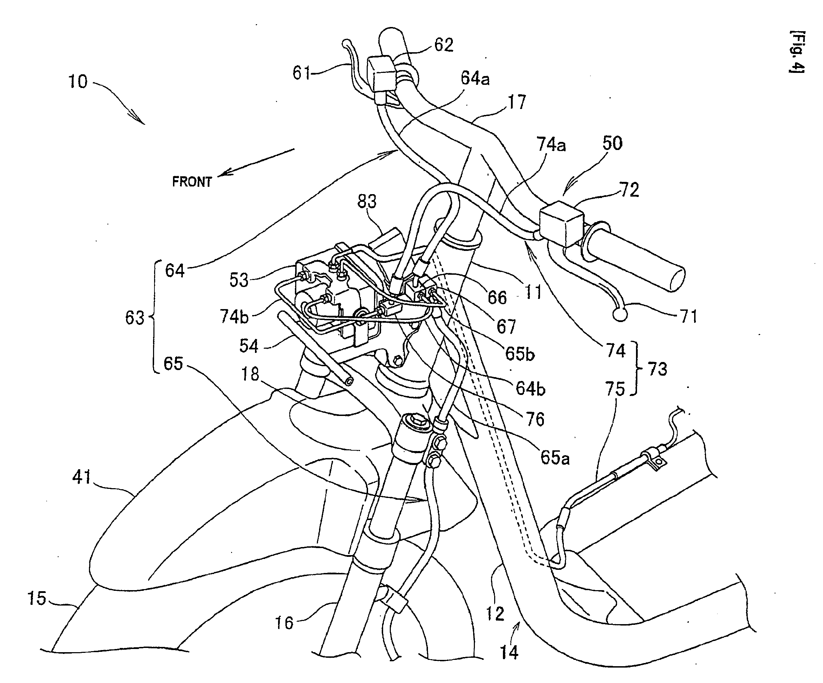

As shown in Fig. 4, the ABS module 53 is provided in the vicinity of the head pipe 11 and in front of the head pipe 11 with respect to the vehicle via bracket 54. The first front upstream piping 64a of the front upstream piping 64 is routed in the vicinity of the head pipe 11. The first rear upstream piping 74a of the rear upstream piping 74 is routed in the vicinity of the head pipe 11.

The second front downstream piping 65a of the front downstream piping 65 is routed so as to extend from the vicinity of the head pipe 11 and lie along the front fork 16. The rear downstream piping 75 extends rearward from the ABS module 53 with respect to the vehicle, and is routed on the main frame 12 so as to lie around the head pipe 11.

Subsequently, routing of the front piping 63 and the rear piping 73 will be described with reference to a plan view.

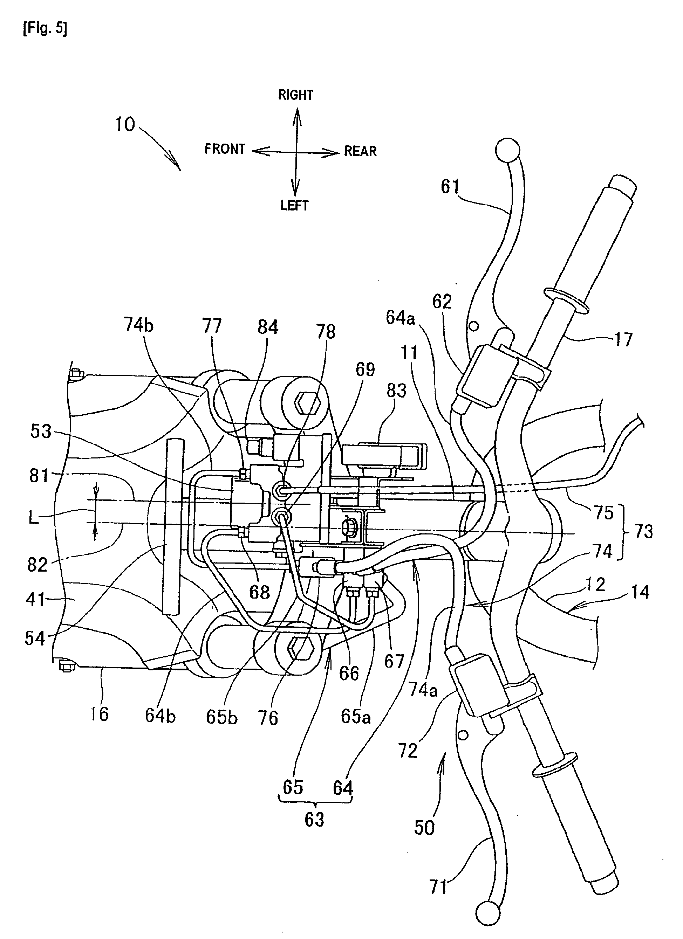

As shown in Fig. 5, the first operating element 61 is provided on the handlebar 17 on the right side in the lateral direction of the vehicle, and the front master cylinder 62 is provided on the first operating element 61. The first front upstream piping 64a extends toward the lateral centre of the vehicle so as to extend from the front master cylinder 62 and lie along the handlebar 17, is then routed along the head pipe 11, and is then connected to the front upstream coupling member 66.

The second front upstream piping 64b extends laterally outward from the front upstream coupling member 66, passes along the side and front of the ABS module 53, and is connected to a first hydraulic inlet portion 68 of the ABS module 53 opening toward the front. The first front downstream piping 65b extends from a first hydraulic outlet portion 69 of the ABS module 53 opening upward, passes above and along the side of the ABS module 53, and is connected to the front downstream coupling member 67.

Also, the second operating element 71 is provided on the handlebar 17 on the left side in the lateral direction, and the rear master cylinder 72 is provided on the second operating element 71. The first rear upstream piping 74a extends toward the lateral centre of the vehicle so as to extend from the rear master cylinder 72 and lie along the handlebar 17, is then routed along the head pipe 11, and is then connected to the rear upstream coupling member 76. The rear upstream coupling member 76 is arranged forwardly of the front upstream coupling member 66 with respect to the vehicle.

The second rear upstream piping 74b extends forwardly from the rear upstream coupling member 76, passes along the side and front of the ABS module 53, and is connected to a second hydraulic inlet portion 77 of the ABS module 53 opening toward the front. The rear downstream piping 75 extends rearwardly of the ABS module 53 from a second hydraulic outlet portion 78 of the ABS module 53 opening upward, and passes on the side of the head pipe 11 and is routed to the main frame 12.

A motor centreline (axial centreline) 81 of the ABS module 53 is laterally offset to the right from a lateral centreline 82 of the vehicle by a distance L. An electronic control unit 83 configured to control the power unit (reference numeral 22 in Fig. 1) is mounted to the right of the lateral centreline 82 of the vehicle and on the right of the head pipe 11 via the bracket 54. A harness connecting port 84 of the ABS module 53 is arranged to the right of the lateral centreline 82 of the vehicle. Since the electronic control unit 83 and the harness connecting port 84 are arranged on the same side with respect to the centreline 82, connection of the harnesses is facilitated.

The front upstream coupling member 66, the front downstream coupling member 67, and the rear upstream coupling member 76 are mounted on the left of the lateral centreline 82 of the vehicle via the bracket 54. Since the front upstream coupling member 66, the front downstream coupling member 67, and the rear upstream coupling member 76 are all arranged on the same side with respect to the centreline 82, piping and connection of the hoses are facilitated.

Subsequently, routing of the second front downstream piping 65a will be described with reference to a side view.

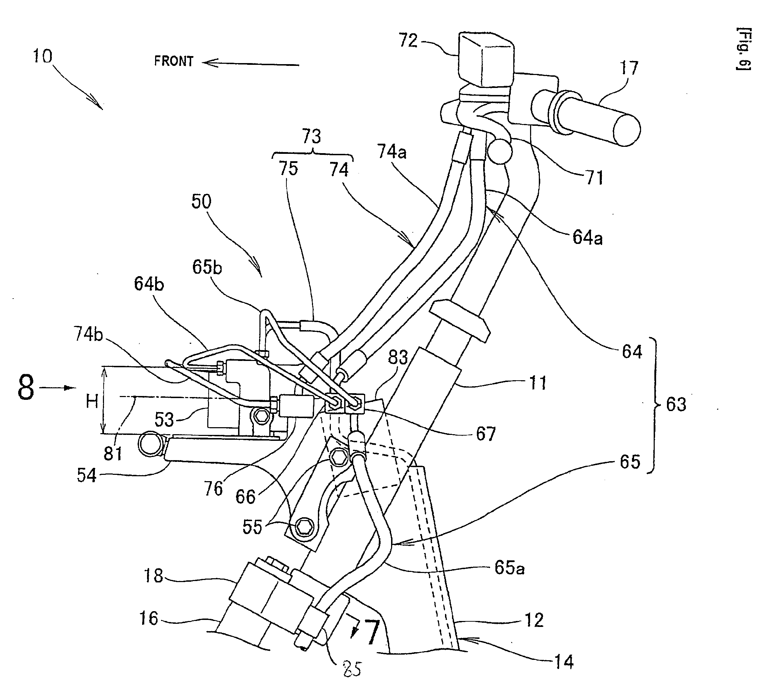

As shown in Fig. 6, the second front downstream piping 65a extends from the front downstream coupling member 67, passes on the side of the head pipe 11, and is routed so as to lie along the front fork 16. The second front downstream piping 65a is fixed by a hose clip 85 provided on a bottom bridge 18 (described later in detail).

The bracket 54 is mounted on the head pipe 11 toward the vehicle front by a bolt 55. In a side view of the vehicle, the front upstream coupling member 66, the front downstream coupling member 67, and the rear upstream coupling member 76 are provided between the ABS module 53 and the head pipe 11 via the bracket 54.

The first front upstream piping 64a, the second front downstream piping 65a, and the first rear upstream piping 74a are flexible hoses.

The motor axial line 81 of the ABS module 53 is oriented in the fore-and-aft (longitudinal) direction with respect to the vehicle. The vertical extent of the ABS module 53 is represented by H. The front upstream coupling member 66, the front downstream coupling member 67, and the rear upstream coupling member 76 are arranged in the vertical extent H of the ABS module 53.

Subsequently, mounting of the hydraulic hose will be described.

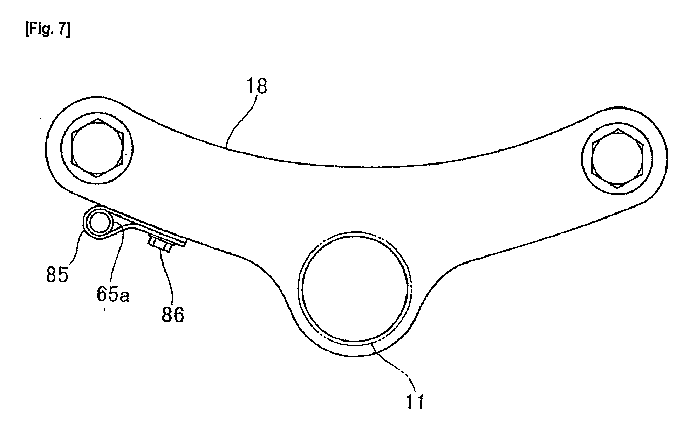

As shown in Fig. 7, the hose clip 85 is bent so as to surround the second front downstream piping 65a, and an end portion thereof is fixed to the bottom bridge 18 with a bolt 86. The hydraulic hoses can be held by a similar hose clip at other portions.

Subsequently, mounting of the ABS module 53 with reference to a front view will be described.

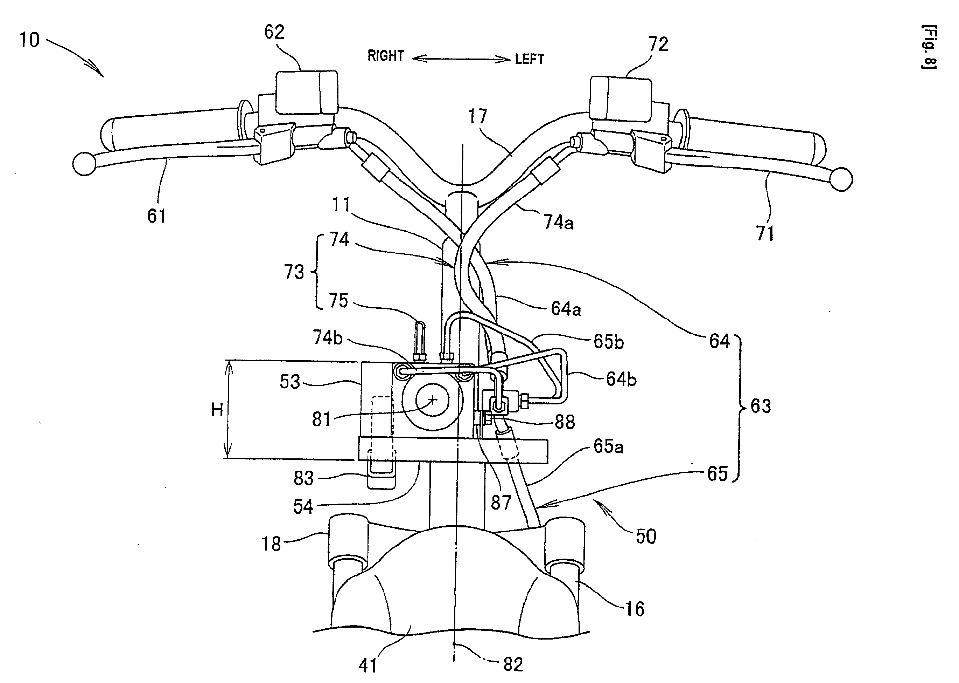

As shown in Fig. 8, the ABS module 53 is mounted on the bracket 54 with a bolt 88 via a bush 87. In the front view of the vehicle, the electronic control unit 83 is arranged within the lateral width of the ABS module 53. The ABS module 53 can be fixed to the bracket 54 without the intermediary of the bush.

Returning to Fig. 6, in this structure, since the front upstream coupling member 66, the front downstream coupling member 67, and the rear upstream coupling member 76 are arranged using a free space between the ABS module 53 and the head pipe 11, compact structure is achieved without increasing the longitudinal extent. Consequently, as shown in Fig. 1, since the front cover 32 may be reduced in size while securing a space for placing legs, this structure is suitable for the scooter-type motorcycle 10 having the step floor 34 between the front cover 32 and the seat 24. Furthermore, this structure is suitable further to the scooter-type motorcycle having a dimension of the front cover 32 in the longitudinal direction of the front cover 32 smaller than a dimension of the front cover in the lateral direction.

Subsequently, an effect of a coupling will be described in comparison with a comparative example.

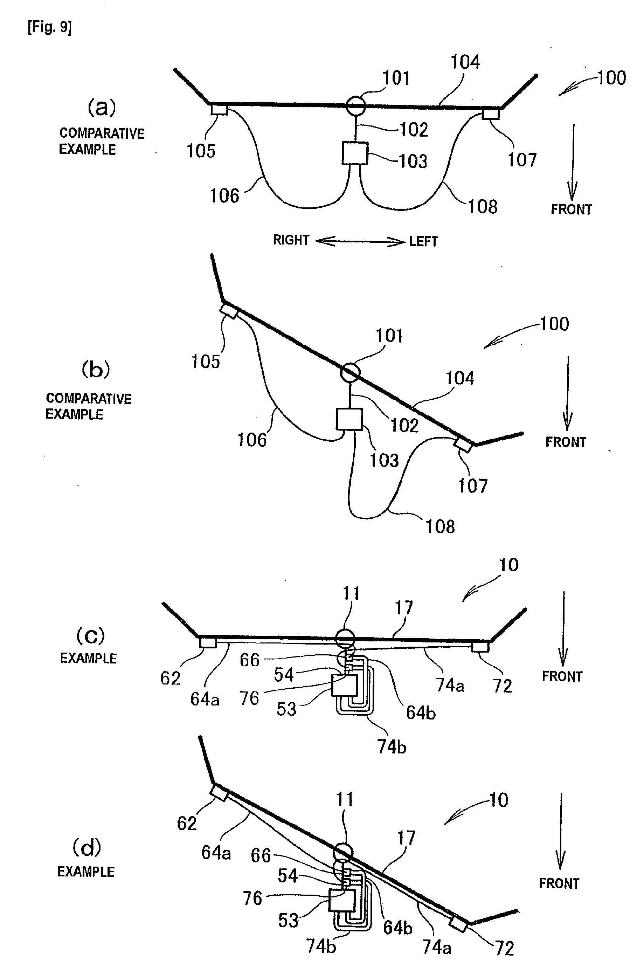

Fig. 9(a) is a plan view conceptually showing a front portion of a prior art motorcycle 100, in which an ABS module 103 is mounted on a head pipe 101 via a bracket 102. A handlebar 104 is provided so as to be rotatable with respect to the head pipe 101, and a first hose 106 extends from a front master cylinder 105 on the right side of the handlebar 104, and is connected directly to the ABS module 103. Also, a second hose 108 extends from a rear master cylinder 107 on the left side of the handlebar 104, and is directly connected to the ABS module 103. The first hose 106 and the second hose 108 are routed from the handlebar 104 to the ABS module 103 so as to be deflected.

Fig. 9(b) is a plan view conceptually showing a state in which the handlebar 104 of the prior art motorcycle 100 is steered to turn rightward. Connecting ports of the ABS module 103 for the first hose 106 and the second hose 108 are essentially spaced apart from the head pipe 101 to some extent. When the handlebar 104 is steered about the head pipe 101, the first hose 106 and the second hose 108 are displaced together with the handlebar 104. Since the connecting ports for the hoses are apart from the head pipe 101, the amounts of deflection of the first hose 106 and the second hose 108 are increased. Therefore, the lengths of the first hose 106 and the second hose 108 need to be increased. Significant deflection of the first hose 106 and the second hose 108 applies loads to the connecting ports for the hoses.

Fig. 9(c) is a drawing conceptually showing a front portion of the motorcycle 10 in the preferred embodiment, in which the front upstream coupling member 66 and the rear upstream coupling member 76 are arranged between the head pipe 11 and the ABS module 53. As will be seen, the amounts of deflection of the first front upstream piping 64a and the first rear upstream piping 74a are relatively smaller than the first hose 106 and the second hose 108 in the prior art example.

Fig. 9(d) is a plan view conceptually showing a state in which the handlebar 17 of the motorcycle 10 in the preferred embodiment is steered rightward. When the handlebar 17 is steered to turn about the head pipe 11, the first front upstream piping 64a and the first rear upstream piping 74a are displaced together with the handlebar 17. However, since the front upstream coupling member 66 and the rear upstream coupling member 76 are in the vicinity of the head pipe 11, the amount of deflection of the first front upstream piping 64a and the first rear upstream piping 74a is small. Therefore, the first front upstream piping 64a and the first rear upstream piping 74a may be short, and hence the routing of the hose is easy, so that the design may be facilitated. Also, the deflections of the first front upstream piping 64a and the first rear upstream piping 74a are small, and loads applied to the front upstream coupling member 66 and the rear upstream coupling member 76 may be reduced.

The operation of the preferred embodiment of the motorcycle 10 described above may be collectively described below.

With regard to Fig. 5, the front upstream coupling member 66 and the front downstream coupling member 67 are arranged in the vicinity of the head pipe 11. Since one end of each of the first front upstream piping 64a and the first rear upstream piping 74a as the brake hoses is connected to each of the front upstream coupling member 66 and the front downstream coupling member 67 arranged in the vicinity of the head pipe 11, one end of each of the brake hoses is supported near the centre of the steering. The closer to the centre of the steering a supported end is located, the less the brake hoses are affected by motion during steering. In other words, since the front upstream coupling member 66 is arranged in the vicinity of the head pipe 11, the distance from the front master cylinder 62 to the front upstream coupling member 66 may be prevented from changing significantly irrespective of the steering of the handlebar 17, so that the deflection of the first front upstream piping 64a as the brake hose generated by the steering can be reduced, whereby the interference with other components may be reduced and the number of steps of design may be reduced.

Furthermore, since the front downstream coupling member 67 is arranged in the vicinity of the head pipe 11, the distance from the front downstream coupling member 67 to the front brake 51 is not changed significantly irrespective of the steering of the handlebar 17, so that the deflection of the second front downstream piping 65a as the front downstream piping 65 generated by the steering may be reduced, whereby the interference with other components may be reduced and the number of steps of design may be reduced.

With further regard to Fig. 5, since the rear upstream coupling member 76 is arranged in the vicinity of the head pipe 11, the influence of the steering of the handlebar 17 on the rear upstream piping 74 as the brake hose may be reduced. In addition, since the front upstream coupling member 66, the front downstream coupling member 67, and the rear upstream coupling member 76 are all arranged at positions offset to the same side from the lateral centre of the vehicle, the workability of maintenance or the like is improved.

With regard to Fig. 6, since the motor axial line 81 of the ABS module 53 is oriented in the longitudinal direction of the vehicle, and the front upstream coupling member 66, the front downstream coupling member 67, and the rear upstream coupling member 76 are arranged within the vertical extent H of the ABS module 53, the piping lengths from the front upstream coupling member 66 and the rear upstream coupling member 76 to the ABS module 53 and the piping length from the ABS module 53 to the front downstream coupling member 67 can be shortened, so that reduction of the cost and weight of the piping are achieved.

With regard to Fig. 5, since the electronic control unit 83 and the harness connecting port 84 are arranged together on one side with respect to the lateral centreline 82 of the vehicle, the operation to mount the harness is easy.

With regard to Fig. 8, since the electronic control unit 83 is arranged in a space on the rear side of the ABS module 53 with respect to the vehicle, effective utilization of the space and reduction in size of the front portion of the vehicle body are achieved.

Although the present invention is applied to a scooter-type motorcycle in the embodiment, the invention can be applied to motorcycles in general, as long as the first operating element and the second operating element are provided on the handlebar. In the embodiment, the front upstream coupling member 66, the front downstream coupling member 67 and the rear upstream coupling member 76 are arranged on the left side of the lateral centreline 82 of the vehicle and the ABS module 53, the harness connecting port 84, and the electronic control unit 83 are arranged on the right side of the lateral centreline 82 of the vehicle, but the arrangement can be vice versa.

The present invention is suitable to a motorcycle having an ABS module.

## Claims

1. A motorcycle (10) comprising:
a head pipe (11) provided on a front portion of a vehicle body (14);
a front brake (51) configured to brake a front wheel (15);
a front master cylinder (62) configured to apply a braking pressure to the front brake (51);
a front piping (63) provided between the front master cylinder (62) and the front brake (51), configured to transmit a liquid pressure;
a rear brake (52) configured to brake a rear wheel (21);
a rear master cylinder (72) configured to apply a braking pressure to the rear brake (52);
rear piping (73) provided between the rear master cylinder (72) and the rear brake (52) and configured to transmit a liquid pressure; and
an ABS module (53) provided at a midsection of the front piping (63) and of the rear piping (73) and being capable of reducing the braking pressure of the front brake (51) and of the rear brake (52), the ABS module (53) being mounted at a position forward of the head pipe (11) and offset to one side with respect to a lateral centre of the vehicle, **characterized in that**
the front piping (63) includes:
front upstream piping (64) configured to connect the front master cylinder (62) and the ABS module (53), including flexible first front upstream piping (64a) extending from the front master cylinder (62) to an upper side of a front upstream coupling member (66) and metallic second front upstream piping (64b) extending from the front upstream coupling member (66) to the ABS module (53), wherein the front upstream coupling member (66) is provided at a midsection of the front upstream piping (64) and at a position offset to the other side with respect to the lateral centre of the vehicle, and arranged between the ABS module (53) and the head pipe (11) in a side view of the vehicle, and
front downstream piping (65) configured to connect the ABS module (53) and the front brake (51), said front downstream piping including metallic first front downstream piping (65b) extending from the ABS module (53) to a front downstream coupling member (67) and flexible second front downstream piping (65a) extending from a lower side of the front downstream coupling member (67) to the front brake (51), wherein said front downstream coupling member (67) is provided at a midsection of the front downstream piping (65) and at a position offset to the other side with respect to the lateral centre of the vehicle, and arranged between the ABS module (53) and the head pipe (11) in side view of the vehicle;
wherein the rear piping (73) includes:
rear upstream piping (74) configured to connect the rear master cylinder (72) and the ABS module (53), including flexible first rear upstream piping (74a) extending from the rear master cylinder (72) to a rear upstream coupling member (76) and metallic second rear upstream piping (74b) extending from the rear upstream coupling member (76) to the ABS module (53), wherein the rear upstream coupling member (76) is provided at a midsection of the rear upstream piping (74) and at a position offset to the other side with respect to the lateral centre of the vehicle, and arranged in the vicinity of the head pipe (11), and
rear downstream piping (75) configured to connect the ABS module (53) and the rear brake (52),
and wherein the front upstream coupling member (66) and the front downstream coupling member (67) are located next to each other.

2. The motorcycle according to Claim 1, wherein a motor axial line of the ABS module (53) is oriented in the longitudinal direction of the vehicle, and
the front upstream coupling member (66), the front downstream coupling member (67), and the rear upstream coupling member (76) are arranged within the vertical extent of the ABS module (53).

3. The motorcycle according to Claim 1 or Claim 2, comprising an electronic control unit (83) configured to control a power unit (22) arranged on one side with respect to the lateral centre of the vehicle and at the side of the head pipe (11), and
a harness connecting port (84) of the ABS module (53) is also arranged on one side with respect to the lateral centre of the vehicle.

4. The motorcycle according to Claim 3, wherein the electronic control unit (83) is arranged within the lateral width of the ABS module (53) in front view of the vehicle.

## Patentansprüche

1. Motorrad (10), umfassend:
ein Lenkkopfrohr (11), das an einem vorderen Abschnitt eines Fahrzeugkörpers (14) vorgesehen ist;
eine Vorderradbremse (51), die zum Bremsen eines Vorderrads (15) konfiguriert ist;
einen vorderen Hauptzylinder (62), der zum Ausüben eines Bremsdrucks auf die Vorderradbremse (51) konfiguriert ist;
eine vordere Rohrleitung (63), die zwischen dem vorderen Hauptzylinder (62) und der Vorderradbremse (51) vorgesehen und zum Übertragen eines Flüssigkeitsdrucks konfiguriert ist;
eine Hinterradbremse (52), die zum Bremsen eines Hinterrads (21) konfiguriert ist;
einen hinteren Hauptzylinder (72), der zum Ausüben eines Bremsdrucks auf die Hinterradbremse (52) konfiguriert ist;
eine hintere Rohrleitung (73), die zwischen dem hinteren Hauptzylinder (72) und der Hinterradbremse (52) vorgesehen und zum Übertragen eines Flüssigkeitsdrucks konfiguriert ist; und
ein ABS-Modul (53), das an einem Mittelteil der vorderen Rohrleitung (63) und der hinteren Rohrleitung (73) vorgesehen ist und zum Verringern des Bremsdrucks der Vorderradbremse (51) und der Hinterradbremse (52) imstande ist, wobei das ABS-Modul (53) an einer Position vor dem Lenkkopfrohr (11) und versetzt zu einer Seite bezüglich eines lateralen Zentrums des Fahrzeugs angebracht ist, **dadurch gekennzeichnet, dass**
die vordere Rohrleitung (63) Folgendes enthält:
eine vordere stromaufwärtige Rohrleitung (64), die zum Verbinden des vorderen Hauptzylinders (62) und des ABS-Moduls (53) konfiguriert ist, enthaltend eine flexible erste vordere stromaufwärtige Rohrleitung (64a), die vom vorderen Hauptzylinder (62) zu einer Oberseite eines vorderen stromaufwärtigen Kupplungsglieds (66) verläuft, und eine metallische zweite vordere stromaufwärtige Rohrleitung (64b), die vom vorderen stromaufwärtigen Kupplungsglied (66) zum ABS-Modul (53) verläuft, wobei das vordere stromaufwärtige Kupplungsglied (66) an einem Mittelteil der vorderen stromaufwärtigen Rohrleitung (64) und an einer Position, die zur anderen Seite bezüglich des lateralen Zentrums des Fahrzeugs versetzt ist, vorgesehen ist und in einer Seitenansicht des Fahrzeugs zwischen dem ABS-Modul (53) und dem Lenkkopfrohr (11) angeordnet ist, und
eine vordere stromabwärtige Rohrleitung (65), die zum Verbinden des ABS-Moduls (53) und der Vorderradbremse (51) konfiguriert ist, wobei die vordere stromabwärtige Rohrleitung eine metallische erste vordere stromabwärtige Rohrleitung (65b), die vom ABS-Modul (53) zu einem vorderen stromabwärtigen Kupplungsglied (67) verläuft, und eine flexible zweite vordere stromabwärtige Rohrleitung (65a) enthält, die von einer Unterseite des vorderen stromabwärtigen Kupplungsglieds (67) zur Vorderradbremse (51) verläuft, wobei das vordere stromabwärtige Kupplungsglied (67) an einem Mittelteil der vorderen stromabwärtigen Rohrleitung (65) und an einer Position, die zur anderen Seite bezüglich des lateralen Zentrums des Fahrzeugs versetzt ist, vorgesehen ist und in Seitenansicht des Fahrzeugs zwischen dem ABS-Modul (53) und dem Lenkkopfrohr (11) angeordnet ist;
wobei die hintere Rohrleitung (73) Folgendes enthält:
eine hintere stromaufwärtige Rohrleitung (74), die zum Verbinden des hinteren Hauptzylinders (72) und des ABS-Moduls (53) konfiguriert ist, enthaltend eine flexible erste hintere stromaufwärtige Rohrleitung (74a), die vom hinteren Hauptzylinder (72) zu einem hinteren stromaufwärtigen Kupplungsglied (76) verläuft, und eine metallische zweite hintere stromaufwärtige Rohrleitung (74b), die vom hinteren stromaufwärtigen Kupplungsglied (76) zum ABS-Modul (53) verläuft, wobei das hintere stromaufwärtige Kupplungsglied (76) an einem Mittelteil der hinteren stromaufwärtigen Rohrleitung (74) und an einer Position, die zur anderen Seite bezüglich des lateralen Zentrums des Fahrzeugs versetzt ist, vorgesehen ist und dem Lenkkopfrohr (11) benachbart angeordnet ist, und
eine hintere stromabwärtige Rohrleitung (75), die zum Verbinden des ABS-Moduls (53) und der Hinterradbremse (52) konfiguriert ist,
und wobei sich das vordere stromaufwärtige Kupplungsglied (66) und das vordere stromabwärtige Kupplungsglied (67) nebeneinander befinden.

2. Motorrad nach Anspruch 1, wobei eine Motoraxiallinie des ABS-Moduls (53) in der Längsrichtung des Fahrzeugs ausgerichtet ist, und
wobei das vordere stromaufwärtige Kupplungsglied (66), das vordere stromabwärtige Kupplungsglied (67) und das hintere stromaufwärtige Kupplungsglied (76) innerhalb der vertikalen Ausdehnung des ABS-Moduls (53) angeordnet sind.

3. Motorrad nach einem der Ansprüche 1 oder 2, umfassend eine elektronische Steuereinheit (83), die zum Steuern einer Leistungseinheit (22) konfiguriert ist, welche auf einer Seite bezüglich des lateralen Zentrums des Fahrzeugs und auf der Seite des Lenkkopfrohrs (11) angeordnet ist, und
einen Kabelstrangverbindungsanschluss (84) des ABS-Moduls (53), der ebenfalls auf einer Seite bezüglich des lateralen Zentrums des Fahrzeugs angeordnet ist.

4. Motorrad nach Anspruch 3, wobei die elektronische Steuereinheit (83) in Vorderansicht des Fahrzeugs innerhalb der lateralen Breite des ABS-Moduls (53) angeordnet ist.

## Revendications

1. Motocyclette (10) comprenant :
une tubulure de refoulement (11) disposée sur une partie avant d'une carrosserie de véhicule (14) ;
un frein avant (51) configuré pour freiner une roue avant (15) ;
un maître-cylindre avant (62) configuré pour appliquer une pression de freinage au frein avant (51) ;
une tuyauterie avant (63) disposée entre le maître-cylindre avant (62) et le frein avant (51), configurée pour transmettre une pression de liquide ;
un frein arrière (52) configuré pour freiner une roue arrière (21) ;
un maître-cylindre arrière (72) configuré pour appliquer une pression de freinage au frein arrière (52) ;
une tuyauterie arrière (73) disposée entre le maître-cylindre arrière (72) et le frein arrière (52) et configurée pour transmettre une pression de liquide ; et
un module ABS (53) disposé au niveau d'une section intermédiaire de la tuyauterie avant (63) et de la tuyauterie arrière (73) et étant susceptible de réduire la pression de freinage du frein avant (51) et du frein arrière (52), le module ABS (53) étant monté au niveau d'une position avant de la tubulure de refoulement (11) et décalé vers un côté par rapport à un centre latéral du véhicule, **caractérisée en ce que**
la tuyauterie avant (63) inclut :
une tuyauterie amont avant (64) configurée pour relier le maître-cylindre avant (62) et le module ABS (53), incluant une première tuyauterie amont souple avant (64a) s'étendant depuis le maître-cylindre avant (62) jusqu'à un côté supérieur d'un élément d'accouplement amont avant (66) et une seconde tuyauterie amont métallique avant (64b) s'étendant depuis l'élément d'accouplement amont avant (66) jusqu'au module ABS (53), dans laquelle l'élément d'accouplement amont avant (66) est disposé au niveau d'une section intermédiaire de la tuyauterie amont avant (64) et à une position décalée vers l' autre côté par rapport au centre latéral du véhicule, et agencé entre le module ABS (53) et la tubulure de refoulement (11) dans une vue de profil du véhicule, et
une tuyauterie aval avant (65) configurée pour relier le module ABS (53) et le frein avant (51), ladite tuyauterie aval avant incluant une première tuyauterie aval métallique avant (65b) s'étendant depuis le module ABS (53) jusqu'à un élément d'accouplement aval avant (67) et une seconde tuyauterie aval avant souple (65a) s'étendant depuis un côté inférieur de l'élément d'accouplement aval avant (67) jusqu'au frein avant (51), dans laquelle ledit élément d'accouplement aval avant (67) est disposé au niveau d'une section intermédiaire de la tuyauterie aval avant (65) et à une position décalée vers l'autre côté par rapport au centre latéral du véhicule, et agencé entre le module ABS (53) et la tubulure de refoulement (11) dans une vue de profil du véhicule ;
dans laquelle la tuyauterie arrière (73) inclut :
une tuyauterie amont arrière (74) configurée pour relier le maître-cylindre arrière (72) et le module ABS (53), incluant une première tuyauterie amont arrière souple (74a) s'étendant depuis le maître-cylindre arrière (72) jusqu'à un élément d'accouplement amont arrière (76) et une seconde tuyauterie amont arrière métallique (74b) s'étendant depuis l'élément d'accouplement amont arrière (76) jusqu'au module ABS (53), dans laquelle l'élément d'accouplement amont arrière (76) est disposé au niveau d'une section intermédiaire de la tuyauterie amont arrière (74) et à une position décalée vers l'autre côté par rapport au centre latéral du véhicule, et agencé au voisinage de la tubulure de refoulement (11), et
une tuyauterie aval arrière (75) configurée pour relier le module ABS (53) et le frein arrière (52),
et dans laquelle l'élément d'accouplement amont avant (66) et l'élément d'accouplement aval avant (67) sont situés l'un à côté de l'autre.

2. Motocyclette selon la revendication 1, dans laquelle une ligne axiale de moteur du module ABS (53) est orientée dans la direction longitudinale du véhicule, et
l'élément d'accouplement amont avant de l'élément (66), l'élément d'accouplement aval avant de l'élément (67), et l'élément d'accouplement amont arrière (76) sont agencés à l'intérieur de l'étendue verticale du module ABS (53).

3. Motocyclette selon la revendication 1 ou la revendication 2, comprenant une unité de commande électronique (83) configurée pour commander une unité de puissance (22) agencée sur un côté par rapport au centre latéral du véhicule et au niveau du côté de la tubulure de refoulement (11), et
un port de connexion de faisceau de câbles (84) du module ABS (53) est également agencé sur un côté par rapport au centre latéral du véhicule.

4. Motocyclette selon la revendication 3, dans laquelle l'unité de commande électronique (83) est agencée à l'intérieur de la largeur latérale du module ABS (53) devant le véhicule.
